**Europäisches Patentamt**

**European Patent Office**

**Office européen des brevets**

(19)

(11) Veröffentlichungsnummer: **0 144 808**
**B1**

(12) # EUROPÄISCHE PATENTSCHRIFT

(45) Veröffentlichungstag der Patentschrift:
20.05.87

(21) Anmeldenummer: 84113618.7

(22) Anmeldetag: 12.11.84

(51) Int. Cl.⁴: **C 09 J 3/14,** C 08 F 255/02,
C 08 F 263/04, C 08 K 5/15

(54) Haftschmelzklebstoffe, ihre Herstellung und Verwendung.

(30) Priorität: 23.11.83 DE 3342307

(43) Veröffentlichungstag der Anmeldung:
19.06.85 Patentblatt 85/25

(45) Bekanntmachung des Hinweises auf die Patenterteilung:
20.05.87 Patentblatt 87/21

(84) Benannte Vertragsstaaten:
BE DE FR GB IT

(56) Entgegenhaltungen:
EP-A-0 014 420
FR-A-2 424 931
US-A-2 857 349

Die Akte enthält technische Angaben, die nach
dem Eingang der Anmeldung eingereicht wurden
und die nicht in dieser Patentschrift enthalten sind.

(73) Patentinhaber: BAYER AG, Konzernverwaltung RP
Patentabteilung, D-5090 Leverkusen 1 Bayerwerk
(DE)

(72) Erfinder: **Waniczek, Helmut, Dr., Wolfskaul 2,
D-5000 Koeln 90 (DE)**
Erfinder: **Bartl, Herbert, Dr., Eichendorffweg 10,
D-5068 Odenthal (DE)**
Erfinder: **Hohmann, Gerhard, Dr., An der
Steinrütsch 35, D-5090 Leverkusen (DE)**
Erfinder: **Mott, Ludwig, Dr., Karl- Jaspers- Strasse
97, D-5090 Leverkusen 3 (DE)**

EP 0 144 808 B1

**Beschreibung**

Die vorliegende Erfindung betrifft neue Haftschmelzklebstoffe. Diese haben eine hohe Wärmefestigkeit und gute Haftung.

Haftschmelzklebstoffe werden bekanntlich durch thermoplastisches Mischen einer Elastomerkomponente mit einem klebrigmachenden Harz und Zusatzstoffen hergestellt. Dabei wird als Elastomerkomponente meist ein Blockcopolymer wie Styrol-Isopren-Styrol- oder Styrol-Butadien-Styrol-Blockcopolymer eingesetzt, welches dem Schmelzhaftklebstoff eine gute Oberflächenklebrigkeit bei mittlerer Wärmefestigkeit verleiht. Ein Nachteil dieser Schmelzhaftklebstoffe kann ihre schlechte Alterungsbeständigkeit sein, die sich bei der Verarbeitung und im Gebrauch negativ auswirkt.

Werden Copolymere aus Ethylen und Vinylacetat als Elastomerkomponente zur Herstellung von Schmelzhaftklebstoffen eingesetzt, werden Produkte erhalten, die alterungsbeständiger als die oben genannten sind, aber eine geringere Wärmebeständigkeit besitzen.

Mangelnde Wärmefestigkeit von Haftschmelzklebstoffen auf Basis von Ethylen-Vinylacetat-Copolymeren zu verbessern wurde schon auf verschiedene Arten zu verbessern versucht. So wird in der DE-A 2 013 158 der Zusatz von pyrogen gewonnenen Kieselsäurefüllstoffen beschrieben. Dieser soll die Wärmefestigkeit der Klebemassen verbessern. Gleichzeitig können die Haftklebeeigenschaften so verändert werden, daß beim Verkleben der Fügeteile angewärmt werden muß, um den Klebstoff zu aktivieren. Bei Raumtemperatur selbstklebende Eigenschaften haben diese Klebestoffe nicht.

In der DE-A 2 917 531 werden Pfropfmischpolymerisate zur Herstellung von Schmelzklebemassen beschrieben. Diese Klebemassen müssen bei der Verklebung durch Wärme aktiviert werden. Wenn die Verklebung bei Raumtemperatur hergestellt wird, ist die Schälfestigkeit entsprechend gering.

Weichmacher enthaltende Propfmischpolymerisate sind in der DE-A 2 903 687 für Haftkleber beschrieben. Jedoch enthalten diese keine expoxidgruppenhatigen Weichmacher.

Gegenstand der vorliegenden Erfindung sind also Haftschmelzklebstoffe mit hoher Wärmestandfestigkeit und Haftung, enthaltend:

a) 60-100 Gew.-Teile eines Pfropfmischpolymerisates der Zusammensetzung 65-97 Gew.-% Pfropfgrundlage, bestehend aus einem Copolymeren aus 45 bis 65 Gew.-% Ethyleneinheiten mit 35 bis 55 Gew.-% Vinylacetateinheiten sowie gegebenenfalls bis zu 10 Gew.-% Einheiten weiterer ungesättigter Verbindungen und 35 bis 3 Gew.-% aufgepfropfter Monomereinheiten, bestehend zu 80-100 Gew.-% Methylmethacrylateinheiten und 0 bis 20 Gew.-% Einheiten weiterer ungesättigter Verbindungen,

b) 3-50 Gew.-Teilen eines epoxidgruppenhaltigen Weichmachers oder eines Gemisches verschiedener epoxidgruppenhaltiger Weichmacher,

c) 60-200 Gew.-Teilen eines klebrigmachenden Harzes und

d) 0-20 Gew.-Teilen weiterer Zusatzstoffe wie Füllstoffen, Weichmachern, Farbstoffen, Stabilisatoren oder Polymeren wie Blockmischpolymerisaten von Styrol und Butadien oder Isopren oder Ethylvinylacetat-Mischpolymerisaten, Polyisobutylen oder ataktisches Polypropylen.

Pfropfmischpolymerisate im Sinne der Erfindung werden in Lösung oder in Masse nach an sich bekannten Verfahren durch Polymerisation von Methylmethacrylat oder Monomerengemischen, die überwiegend, mindestens zu 80 Gew.-% aus Methylmethacrylat bestehen, in Gegenwart von Copolymeren aus 45-65 Gew.-% Ethyleneinheiten, 35-55 Gew.-% Vinylacetateinheiten sowie gegebenenfalls bis zu 10 Gew.-% Einheiten weiterer ungesättigter Verbindungen hergestellt, so daß Pfropfmischpolymerisate 3-35 Gew.-% Methylmethacrylateinheiten enthalten.

Bis zu 50 Gew.-% der Ethylen-Vinylacetat-Copolymeren kann durch andere Polymere ersetzt werden, z.B. Ethylen-Acrylsäureester-Copolymere, Copolymere aus Ethylen und Vinylacetat mit bis zu 35 Gew.-% Vinylacetateinheiten oder Ethylen-Propylen-Copolymere, die bis zu 5 Gew.-% ungesättigter Einheiten wie Ethylidennorbornen enthalten können.

Eine bevorzugte Herstellung der erfindungsgemäß zu verwendenden Pfropfmischpolymerisate besteht darin, daß man die Copolymeren in organischen Lösungsmitteln, z.B. Aromaten wie Toluol, Ester wie Ethylacetat oder Alkoholen wie tert.-Butanol in Gegenwart der zu pfropfenden Monomeren löst, einen Radikalbildner in Mengen von 0,2 bis 5 Gew.-%, bezogen auf das Monomergemisch zugibt und bei Temperaturen von 0 bis 180°C, vorzugsweise bei 30 bis 120°C die Pfropfpolymerisation durchführt. Anschließend wird das Pfropfpolymerisat durch Eindampfen von Lösungsmitteln und eventuell überschüssigen Monomeren befreit.

Unter Radikalbildnern im Sinne der Erfindung sind z.B. Peroxide, Azoverbindungen, Sauerstoff, Strahlung (z.B. UV-Strahlen), Radiowellen oder andere Radikale bildende Zusätze zu verstehen.

Bevorzugt werden organische Peroxide eingesetzt, wobei besonders bevorzugt z.B. Peroxodicarbonate oder Diacylperoxide werden (z.B. H. Elias, "Makromoleküle", Hüthig & Wepf Verlag Basel, 1972, Seite 478).

Die Pfropfpolymerisate sind zähelastische, bei Raumtemperatur nicht klebrige Massen. Durch Mischen dieser Pfropfpolymerisate mit klebrigmachenden Harzen im Gewichtsverhältnis 1:0,5 bis 1:3 kann man sehr gut wärmebeständige Schmelzklebstoffe herstellen, die jedoch bei Raumtemperatur keine selbstklebenden Eigenschaften besitzen. Durch Zusatz von Weichmachern wie Phthalsäureestern oder Phosphorsäureestern in Mengen von 5 bis 30 Gew.-%, bezogen auf die Summe aus Pfropfmischpolymerisat, Harz und Weichmacher, kann man diesen Massen zwar selbstklebende Eigenschaften bei Raumtemperatur verleihen, wobei aber die Wärmefestigkeit abfällt.

Bei einem erfindungegemäßen Zusatz von epoxidgruppenhaltigen Weichmachern in Mengen von 1 bis 30

0 144 808

Gew.-%, bezogen auf die Summe aus Pfropfmischpolymerisat, Harz und Weichmacher kommt es überraschenderweise nicht zu dem starkem Abfall der Wärmefestigkeit und man erhält Massen mit guten Hafteigenschaften.

Unter klebrigmachenden Harzen im Sinne der Erfindung werden beispielsweise modifizierte oder unmodifizierte Kolophoniumharze wie Kolophonium, hydriertee Kolophonium oder dimerisiertes Kolophonium bzw. deren Ester mit Alkoholen wie Glycerin oder Pentaerythrit und Kohlenwasserstoffharze wie Cumaron- oder Indenharze verstanden.

Unter epoxidgruppenhaltigen Weichmachern im Sinne der Erfindung sind Ole oder epoxidierte Fettsäureester von Alkoholen mit 1 bis 12 C-Atomen zu verstehen.

Bevorzugt finden Ester der epoxidierten Fett- oder Ölsäuren mit n- oder iso-Alkoholen oder deren Triglyceride Verwendung.

Die erfindungsgemäß einzusetzenden epoxidierten Öle und Fettsäureester leiten sich meist von Naturprodukten ab und können demgemäß nicht immer einheitlich in ihrer Struktur sein. Ihre Herstellung erfolgt meist in an sich bekannter Weise durch Epoxidierung ungesättigter Fett- oder Ölsäureester (z.B. E. Dachselt in "Plaste und Kautschuk", 10. Jahrgang, Heft 5/1963)

Beispiele erfindungsgemäß verwendbarer epoxidgruppenhaltiger Weichmacher sind Epoxidierungsprodukte von natürlich vorkommenden Ölen wie Sojaöl, Erdnuß-, Raps-, Sonnenblumen-, Lein-, Baumwollsaat-, Tall-, Sperm-, Fischöl oder Schweineschmalz, oder die Ester epoxidierter Fettsäuren mit geradkettigen, verzweigten, cycloaliphatischen oder araliphatischen Monoalkoholen wie Methylepoxisterat, n- oder iso-Butylepoxistearat oder Cyclohexylmethylepoxistearat.

Der Epoxidsauerstoffgehalt der epoxidierten Öle und epoxidierten Ester von Fettsäuren beträgt im allgemeinen 1 bis 10 Gew.-%. Im allgemeinen enthalten diese Produkte auch olefinische Gruppen von nicht umgesetzten Doppelbindungen. Da die Ausgangsprodukte natürlicher Herkunft sind, können die epoxidgruppenhaltigen Weichmacher Gemische anderer Verbindungen wie gesättigte Fettsäureester enthalten. Die Viskosität der epoxidierten Ester (Gemische) beträgt im allgemeinen 100 bis 5000 mPa.s bei 20 °C.

Die Zugabe der epoxidgruppenhaltigen Weichmacher zu den erfindungsgemäßen Klebstoffgemischen erfolgt normalerweise durch Vereinigen der Komponenten und Mischen bei Temperaturen von 100°C bis 250°C, vorzugsweise von 150°C bis 220°C.

Eine bevorzugte Ausführungsform der Erfindung besteht darin, daß der epoxidgruppenhaltige Weichmacher der Pfropfgrundlage der Komponente a) zugegeben und anschließend die Pfropfreaktion ausgeführt wird.

Eine weitere bevorzugte Ausführungsform besteht darin, daß man den epoxidgruppenhaltigen Weichermacher dem Pfropfprodukt nach der Pfropfung und vor der Aufarbeitung zugibt. Nach diesen beiden Varianten erhält man Klebstoffrohstoffe, die nur mehr mit klebrigmachenden Harzen und gegebenenfalls Zusatzstoffen gemischt werden müssen.

Die erfindungsgemäßen Haftklebstoffe stellen zähe, klebrige Massen dar, die in geschmolzenem Zustand mit üblichen Vorrichtungen wie Düsen- oder Walzenauftragssystemen auf verschiedene Trägermaterialien, z.B. Papier, Kunststofffolien, Metalle oder Textilien aufgebracht werden können und dann eine druckempfindliche, selbstklebende Oberfläche besitzen. Sie zeichnen sich durch hohe Haftung und Wärmefestigkeit aus.


**Beispiele:**

1) 200 g eines Ethylen-Vinylacetat-Copolymeren mit einem Vinylacetatgehalt von 45 Gew.-% und einem Schmelzindex bei 190°C von 2-5 g/10 min. werden mit 1000 g tert.-Butanol bei 70 °C unter Rühren gelöst. Dann werden 50 g Methylmethacrylat und 1,4 g Dicyclohexylperoxodicarbonat zugegeben und unter Rühren auf 80°C erwärmt, so daß das Reaktionsgemisch am Rückfluß siedet. Nach 1 Stunde bei 80°C werden 2,9 g 2.2'-Methylen-bis-(4-methyl-6-tert. butylphenol) zugegeben und auf Raumtemperatur abgekühlt.

Das Reaktionsgemisch wird nun in eine Schale gegossen und bei 50°C im Vakuum (20 mbar) bis zur Gewichtskonstanz getrocknet. Es verbleiben 250 g einer zähen, kautschukelastischen Masse, die gemäß der folgenden Tabelle 1 mit den jeweiligen Weichmachern, einem Glycerinester des hydrierten Kolophoniums als klebrigmachendem Harz und Stabilisatoren bei 180°C gemischt werden, bis eine homogene Schmelze erreicht ist.

2) 200 g eines Ethylen-Vinylacetat-Copolymers aus 45 Gew.-% Vinylacetateinheiten und 55 Gew.-% Ethyleneinheiten und einem Schmelzindex von 9 g/10 min nach DIN 53735 bei 190°C und 2,16 kg Belastung werden in 1000 g tert.-Butanol und 40,7 g epoxidiertem Sojabohnenöl bei 70°C unter Rühren gelöst. Dann werden 50 g Methylmethacrylat und 1,4 g Dicyclohexylperoxodicarbonat zugegben und das Reaktionsgemisch 1 Stunde bei ca. 80°C unter Rückfluß gekocht. Danach werden 2,9 g 2.6-Di-tert.-butyl-p-kresol zugegeben und bei 50°C im Wasserstrahlvakuum zur Gewichtskonstanz eingedampft. Der Rückstand wird mit 250 g eines Glycerinesters des hydrierten Kolophoniums und 7 g 2.2'-Methylen-bis-(4-methyl-6-tert. butylphenol) bei 180°C homogenisiert.

Das Produkt wird als Schmelzhaftklebstoff geprüft (siehe Tabelle 3).

Es werden Pfropfprodukte entsprechend der Vorschrift im Beispiel 1 hergestellt, wobei statt Methylmethacrylat Monomere in einer Menge gemäß der folgenden Tabelle 2 eingesetzt werden.

3

Tabelle 1

| Nr. | Pfropf-polyme-risat Gew.-Teile | Harz[3] Gew.-Teile | Stabili-sator[4] Gew.-Teile | Weichmacher Gew.-Teile |
|---|---|---|---|---|
| a) | 97 | 100 | 1,6 | 3 Dioctylocdipat |
| b) | 90 | " | " | 10 " |
| c) | 87 | " | " | .13 " |
| d) | 85 | " | " | 15 " |
| e) | 90 | " | " | 10 Alkylsulfonsäureester des Phenols |
| f) | 85 | " | " | 15 " |
| g) | 93 | " | " | 7 Poly-1,6-butandiol-adipat |
| h) | 85 | " | " | 15 " |
| i) | 95 | " | " | 5 Dioctylphthalat |
| j) | 90 | " | " | 10 " |
| k) | 89 | " | " | 11 epoxidiertes Soja-bohnenöl |
| l) | 86 | " | " | 14 " |
| m) | 75 | " | " | 25 " |
| n) | 86 | " | " | 14 i-Butylepoxystearat |
| o) | 86 | " | " | 14 epoxidiertes Leinöl |
| p) | 86 | " | " | 14 n-Butylepoxystearat |
| q) | 100 | " | " | (kein Weichmacher) |
| r) | 100 | 150 | " | " |
| s) | 100 | 200 | " | " |

**Tabelle 2**

| Nr. | Monomere /g̅7 |
|-----|---------------|

| | | | |
|---|---|---|---|
| A) | 50 g | Methylmethacrylat + | |
| | 2 g | Methacrylsäure | |
| B) | 50 g | Methylmethacrylat + | |
| | 2 g | Maleinsäureanhydrid | |
| C) | 50 g | Methylmethacrylat | |
| | 100 g | Vinylacetat | |
| D) | 50 g | n-Butylacrylat | |
| E) | 50 g | 2-Ethylhexylacrylat | |

Die einzelnen Pfropfprodukte werden bei 180 °C mit Zusätzen homogenisiert:

| Nr. | Gew.-Tle. Pfropfprodukt | Harz[3] Gew.Tle. | Stabilisator[4] Gew.-Tle. | Weichmacher Gew.-Tle. |
|-----|-------------------------|------------------|---------------------------|-----------------------|
| u) | 80 A) | 100 | 1,6 | 20 epoxidiertes Sojabohnenöl |
| v) | 80 B) | 100 | 1,6 | 20 " |
| w) | 85 B) | 100 | 1,6 | 15 " |
| x) | 95 D) | 105 | 1,6 | |
| y) | 95 E) | 105 | 1,6 | |

Die Klebemassen wurden bei 180°C mit einem Rakel auf eine 50 µ dicke Polyethylenglykolterephthalat-Folie in einer Breite von 200 mm, einer Länge von 300 mm und einer Dicke von 0,2 mm aufgetragen.

Zur Prüfung des Schälwiderstandes wurden aus den beschichteten Folien 300 mm lange und 15 mm breite Streifen geschnitten, und diese auf eine hochglanzpolierte Edelstahlplatte blasenfrei aufgebracht und durch zweimaliges Überrollen mit einer 3 kg schweren Aluminiumwalze angepaßt.

Nach Lagerzeiten von 60 Minuten und 30 Tagen wurden die Folien bei 23°C mit einer Geschwindigkeit von 300 mm/Min. in einem Schälwinkel von 180° von der Edelstahlplatte abgezogen. Die dabei erforderlichen Kräfte sind in den nachstehenden Tab. 1 aufgeführt.

Zur Prüfung der Wärmefestigkeit wurden 20 mm breite Streifen der beschichteten Folien in einer Länge von 10 mm auf eine wie bei der vorstehenden Prüfung des Schälwiderstandes verwendete Edelstahlplatte überlappend geklebt. Nach einer Lagerung von 60 Minuten wurden die Metallenden der Klebungen in einem Umluftwärmeschrank bei 70°C eingespannt. Nach einer Anwärmzeit von 60 Minuten wurden die freien Folienenden mit unterschiedlichen Gewichten belastet und die Zeit in Minuten bis zur Zerstörung der Klebung gemessen. Die Ergebnisse sind in der nachstehenden Tabelle 3 aufgeführt.

Für Vergleiche wurden die nicht erfindungsgemäßen Schmelzklebstoffe z1 und z2, die gemäß Tabelle 4 hergestellt wurden, untersucht.

5

**Tabelle 3**

| Schmelz-klebstoff | Schälfestigkeit (N/mm) bei 23 °C | Wärmefestigkeit bei 70°C (Min.) bei Belastung mit: | | | | |
|---|---|---|---|---|---|---|
| | sofort | 50g | 75g | 100g | 150g | 200g |
| a | 1.1 | 60 | 48 | | | |
| b | 1.1 | 60 | 41 | | | |
| c | 1.2 | 60 | 32 | | | |
| d | 1.1 | 60 | 33 | | | |
| e | 1.2 | 60 | 32 | | | |
| f | 1.3 | 60 | 35 | | | |
| g | 1.2 | 60 | 29 | | | |
| h | 1.3 | 44 | | | | |
| i | 1.2 | 60 | 42 | | | |
| j | 1.3 | 58 | 22 | | | |
| k | 1.4 | 60 | 60 | 60 | 32 | |
| l | 1.4 | 60 | 60 | 60 | 33 | |
| m | 1.2 | 60 | 60 | 60 | 34 | |
| n | 1.0 | 60 | 60 | 60 | 38 | |
| o | 1.1 | 60 | 60 | 60 | 60 | 31 |
| p | 1.0 | 60 | 60 | 60 | 60 | 30 |
| q | 0.8 | 60 | 60 | 60 | 60 | 20 |
| r | 0.9 | 60 | 60 | 60 | 60 | 14 |
| s | 0.9 | 60 | 60 | 60 | 60 | 14 |
| u | 1.1 | 60 | 48 | | | |
| v | 1.2 | 60 | 60 | 33 | | |
| w | 1.4 | 60 | 40 | | | |
| x | 1.4 | 40 | | | | |
| y | 0.9 | 52 | | | | |
| z1 | 1.2 | 20 | | | | |
| z2 | 1.8 | 60 | 44 | | | |

**Tabelle 4**

|                             | z1  | z2  |
| --------------------------- | --- | --- |
| Mischpolymerisat [1]        | 75  | -   |
| Blockpolymerisat [2]        | -   | 75  |
| Harz [3]                    | 75  | 75  |
| Alterungsschutzmittel [4]   | 1.5 | 1.5 |

Die Herstellung der Schmelzklebstoffe erfolgte in der Weise, daß im einem Schmelzgefäß bei 180°C zunächst das Harz aufgeschmolzen und danach das Polymer sowie das Alterungsschutzmittel eingearbeitet wurden. Anschließend wurde die Schmelze unter Rühren homogenisiert.

Die in den Beispielen verwendeten Bezeichnungen bedeuten:

1) Ethylen-Vinylacetat-Mischpolymerisat der Fa. Bayer AG, enthaltend 65 Gew.-% Ethyleneinheiten und 45 Gew.-% Vinylacetateinheiten mit einem Schmelzindex von 2-5 g/10 min. bei 190°C und 2,16 kg Belastung.

2) Styrol-Isopren-Styrol-Blockcopolymerisat der Fa. Shell

3) Glycerinester des hydrierten Kolophoniums

4) 2,2'-Methylen-bis-(4-methyl-t-tert.-Butylphenol)

Die Schmelzindices wurden nach DIN 53735 gemessen.

**Patentansprüche**

1. Haftschmelzklebstoffe, enthaltend

a) 60-100 Gew.-Teile eines Pfropfmischpolymerisates der Zusammensetzung 65 bis 97 Gew.-% Pfropfgrundlage, bestehend aus einem Copolymeren aus 45 bis 65 Gew.-% Ethyleneiheiten mit 35 bis 55 Gew.-% Vinylacetateinheiten sowie gegebenenfalls bis zu 10 Gew.-% Einheiten weiterer ungesättigter Verbindungen und 35 bis 3 Gew.-% aufgepfropfter Monomereinheiten, bestehend zu 80 bis 100 Gew.-% Methylmethacrylateinheiten und 0 bis 20 Gew.-% Einheiten weiterer ungesättigter Verbindungen,

b) 3 bis 50 Gew.-Teile eines epoxidgruppenhaltigen Weichmachers oder eines Gemisches verschiedener epoxidgruppenhaltiger Weichermacher,

c) 60 bis 200 Gew.-Teile eines klebrigmachenden Harzes und

d) 0 bis 20 Gew.-Teile weiter Zusatzstoffe,

dadurch gekennzeichnet, daß die epoxidgruppenhaltigen Weichmacher epoxidierte Öle oder epoxidierte Fettsäureester von Alkoholen mit 1 bis 12 Kohlenstoffatomen sind.

2. Haftschmelzklebstoffe gemäß Anspruch 1, dadurch gekennzeichnet, daß das Pfropfcopolymer a) durch Pfropfcopolymerisation von überwiegend Methylmethacrylat auf Ethylen-Vinylacetat-Copolymere in Masse oder in Lösung in Gegenwart oder Abwesenheit von epoxidgruppenhaltigen Weichmachern bei Temperaturen zwischen 0°C und 180°C hergestellt wird.

3. Haftschmelzklebstoffe gemäß Anspruch 1, dadurch gekennzeichnet, daß das Ethylen-Vinylacetat-Copolymere bis zu 50 Gew.-% durch andere Polymere ersetzt wird.

4. Haftschmelzklebstoffe gemäß Anspruch 1, dadurch gekennzeichnet, daß die epoxidgruppenhaltigen Weichmacher einen Epoxidsauerstoffgehalt von 1 bis 10 Gew.-% und eine Viskosität bei 20°C von 100 bis 5000 mPa.s besitzen.

**Revendications**

1. Colles fusibles contenant:

a) 60 à 100 parties en poids d'un copolymère greffé composé de 65 à 97% en poids d'un support de greffage consistant en un copolymère de 45 à 65% en poids de motifs d'éthylène et 35 à 55% en poids de motifs d'acétate de vinyle et, le cas échéant, jusqu'à 10% en poids de motifs d'autres composés insaturés, et 35 à 3% en poids de motifs de monomères fixés par greffage, consistant pour 80 à 100 % en poids en motifs de méthacrylate de méthyle et 0 à 20 % en poids en motifs d'autres composés insaturés,

0 144 808

b) 3 à 50 parties en poids d'un plastifiant contenant des groupes époxydes ou d'un mélange de plusieurs plastifiants contenant des groupes époxydes,

c) 60 à 200 parties en poids d'une résine conférant les propriétés collantes, et

d) 0 à 20 parties en poids d'autres additifs, caractérisées en ce que les plastifiants contenant des groupes époxydes sont des huiles époxydées ou des esters d'acides gras époxydés d'alcools contenant 1 à 12 atomes de carbone.

2. Colles fusibles selon la revendication 1, caractérisées en ce que le copolymère greffé a) est préparé par copolymérisation greffée de monomères consistant principalement en méthacrylate de méthyle sur des copolymères éthylène-acétate de vinyle en masse ou en solution en présence ou en l'absence des plastifiants contenant des groupes époxydes à des températures de 0 à 180°C.

3. Colles fusibles selon la revendication 1, caractérisées en ce que le copolymère éthylène-acétate de vinyle est remplacé en proportions allant jusqu'à 50 % en poids par d'autres polymères.

4. Colles fusibles selon la revendication 1, caractérisées en ce que les plastifiants contenant des groupes époxydes ont une teneur en oxygène d'époxyde de 1 à 10 % en poids et une viscosité à 20°C de 100 à 5 000 mP.s.

## Claims

1. Thermoplastic contact adhesives containing

a) 60-100 parts by weight of a graft copolymer composed of 65 to 97% by weight of a graft base consisting of a copolymer of 45 to 65% by weight of ethylene units with 35 to 55% by weight of vinyl acetate units and optionally up to 10% by weight of units of other unsaturated compounds and 35 to 3% by weight of grafted-on monomer units consisting of 80 to 100% by weight of methyl methacrylate units and 0 to 20% by weight of units of other unsaturated compounds,

b) 3 to 50 parts by weight of a plasticiser containing epoxide groups or of a mixture of various plasticisers containing epoxide groups,

c) 60 to 200 parts by weight of a tackifying resin and

d) 0 to 20 parts by weight of other additives, characterised in that the plasticisers containing epoxide groups are epoxidised oils or epoxidised fatty acid esters of alcohols having 1 to 12 carbon atoms.

2. Thermoplastic contact adhesives according to Claim 1, characterised in that the graft copolymer a) is prepared by graft copolymerisation of predominantly methyl methacrylate on ethylene/vinyl acetate copolymers, solvent-free or in solution, in the presence or absence of plasticisers containing epoxide groups, at temperatures between 0°C and 180°C.

3. Thermoplastic contact adhesives according to Claim 1, characterised in that up to 50% by weight of the ethylene/vinyl acetate copolymer is replaced by other polymers.

4. Thermoplastic contact adhesives according to Claim 1, characterised in that the plasticisers containing epoxide groups have an epoxide oxygen content of 1 to 10% by weight and a viscosity at 20°C of 100 to 5000 mPa.s.

8